# EUROPÄISCHE PATENTANMELDUNG

(11) **EP 4 011 700 A1**
(43) Veröffentlichungstag der Anmeldung: **15.06.2022**
(21) Anmeldenummer: 21202935.9
(22) Anmeldetag: 15.10.2021
(51) Int. Cl.: B60P 3/34, B32B 27/12, B32B 27/14, B32B 27/32, B32B 27/36, B32B 27/40, B32B 5/02, B32B 7/12, B32B 7/14

(54) **DACHKONSTRUKTION MIT EINEM FALTENBALG UND FALTENBALG**

(30) Priorität: 08.12.2020 DE 102020132671; 09.12.2020 DE 102020132873
(71) Anmelder: PARAT Beteiligungs GmbH, 94089 Neureichenau (DE)
(72) Erfinder: Kremsreiter, Martin, 94089 Neureichenau (DE)
(74) Vertreter: Roche, von Westernhagen & Ehresmann

(57) **Zusammenfassung**

Darstellt und beschrieben ist unter anderem eine Dachkonstruktion (11) für ein Kraftfahrzeug (12), umfassend ein verlagerbares Dachelement (13), das zwischen einer eingefahrenen Nichtgebrauchsposition (17) und einer ausgefahrenen Gebrauchsposition (16) verlagerbar ist, wobei sich das Dachelement (13) in seiner ausgefahrenen Gebrauchsposition (16) in einer Abstandsstellung (18) zu einer Karosserie (14) des Fahrzeuges befindet, wobei an dem Dachelement (13) ein Faltenbalg (10) angeordnet ist, der bei in Gebrauchsposition befindlichem Dachelement einen aufgespannten Zustand (20) einnimmt und einen Abstand (19a 19b) zwischen dem Dachelement und der Karosserie überbrückt, und der bei in Nichtgebrauchsposition befindlichem Dachelement einen komprimierten, in Falten (22a, 22b) abgelegten Zustand (21) einnimmt.

Eine Besonderheit besteht unter anderem darin, dass der Faltenbalg (10) eine Schichtstruktur (24) umfasst, die wenigstens zwei unterschiedliche Schichten (26, 27, 28) aufweist.

## Beschreibung

Die Erfindung betrifft zunächst eine Dachkonstruktion nach dem Oberbegriff des Anspruchs 1.

Derartige Dachkonstruktionen sind bekannt und weit verbreitet. Beispielsweise sind derartige Dachkonstruktionen von Fahrzeugen her bekannt, die auch als Camper oder Wohnmobile bezeichnet werden, die ein ausstellbares Dachelement aufweisen. Infolge einer Verlagerung eines Dachelementes in eine ausgefahrene Gebrauchsposition kann Schlafraum oder zusätzlicher Schlafraum oder eine Vergrößerung des Fahrzeuginnenraums generiert werden.

Für den Fall, dass das Kraftfahrzeug, z. B. im Rahmen einer Urlaubsreise, einen Standplatz zur Übernachtung angefahren hat, kann ein Benutzer das Dachelement manuell, ggf. auch motorisch angetrieben, aus der Nichtgebrauchsposition in die ausgefahrene Gebrauchsposition verlagern. Dabei kann insbesondere eine Aufstellvorrichtung dafür sorgen, z. B. unter Zuhilfenahme von Lenkern und/oder einem Gestänge, das Dachelement in der ausgefahrenen Gebrauchsposition zu halten.

Das Dachelement befindet sich in seiner Gebrauchsposition in einer Abstandsstellung zu einem Bereich der Karosserie des Fahrzeuges. Im Stand der Technik ist es bereits bekannt, einen Faltenbalg vorzusehen, der mit einem ersten Bereich oder Abschnitt an der Karosserie, und einem anderen zweiten Bereich oder Abschnitt an dem Dachelement festgelegt ist. Befindet sich das Dachelement in Gebrauchsposition, ist der Faltenbalg aufgespannt und überbrückt den Abstand zwischen dem Dachelement und der Karosserie. Der Innenraum des Fahrzeuges, der durch das ausgefahrene Dachelement und durch den aufgespannten Faltenbalg vergrößert oder erweitert wird, ist auf diese Weise sicher, insbesondere wasserdicht und/oder blickdicht oder lichtdicht, ggf. auch luftdicht oder schalldicht oder schallverringernd, gegenüber dem Außenraum abgeschlossen.

Wenn das Dachelement - nachdem es nicht mehr benötigt wird - in seine Nichtgebrauchsposition rücküberführt wird, kann sich der Faltenbalg in einen komprimierten Zustand ablegen. Insbesondere erfolgt eine solche Ablage platzsparenden Falten, woher der Name "Faltenbalg" rührt.

Der Faltenbalg wird in Folge einer Verlagerung des Dachelementes aus der Nichtgebrauchsposition in die Gebrauchsposition automatisch von einem komprimierten Zustand in einen aufgespannten Zustand überführt. Dasselbe gilt analog bei der rückwärtigen Bewegung.

Die Anmelderin entwickelt und fertigt seit geraumer Zeit Faltenbälge für Dachkonstruktionen der beschriebenen Art.

Der Anmelderin ist dabei aufgefallen, dass aufgrund des Ablageverhaltens des Faltenbalges bei Benutzung einer Dachkonstruktion über lange Zeiträume Knickstellen in dem Material des Faltenbalges auftreten können. Gelegentlich kommt es aufgrund der sich bildenden Knicke sogar zu Rissbildungen in dem verwendeten Material. Bekannt ist die Verwendung von Baumwolle oder aus Polyester zur Herstellung von Faltenbälgen.

Die Erfindung stellt sich die Aufgabe, die bekannt gewordene, druckschriftlich nicht belegbare Dachkonstruktion derartig weiterzuentwickeln, dass das Ablageverhalten des Faltenbalges in einen komprimierten Zustand verbessert wird, und dass die im Stand der Technik beschriebenen nachteiligen Auswirkungen eliminiert oder reduziert werden.

Die Erfindung löst diese Aufgabe mit den Merkmalen des Anspruches 1, insbesondere mit denen des Kennzeichenteils, und ist demgemäß dadurch gekennzeichnet, dass der Faltenbalg eine Schichtstruktur umfasst, die wenigstens zwei unterschiedliche Schichten aufweist.

Das Prinzip der Erfindung besteht im Wesentlichen - darin, in Abänderung des bei dem Faltenbalg des Standes der Technik - verwendeten Materials nunmehr auf eine Schichtstruktur zurückzugreifen. Die Schichtstruktur umfasst erfindungsgemäß wenigstens zwei unterschiedliche Schichten oder Lagen. Vorzugsweise handelt es sich um drei Schichten oder um mindestens drei Schichten, nämlich zwei äußere Schichten und eine dazwischen angeordnete Mittelschicht.

Die Schichten können vorzugsweise aus unterschiedlichen Materialien bestehen. Die unterschiedlichen Schichten sind vorteilhafterweise aneinander befestigt.

Die Erfindung erkennt, dass durch eine Bereitstellung einer Schichtstruktur aus unterschiedlichen Schichten ein geändertes Ablageverhalten des Faltenbalges erreicht werden kann:
Während es bei einem Faltenbalg des Standes der Technik bei Verwendung nur einer einzigen Materialschicht, z. B. aus Baumwolle oder Polyester, dazu kommen konnte, dass bei einer Unterbringung des Faltenbalges im komprimierten Zustand Falten oder Knicke entstehen, die sich, insbesondere wenn sich der Faltenbalg über längere Zeiträume im komprimierten Zustand befand, in - bei aufgespanntem Faltenbalg - sichtbare Knickstellen oder gar Risse wandelten oder optisch erkennbare Abzeichnungen oder Schattierungen hinterließen, kann erfindungsgemäß eine speziell angepasste Schichtstruktur bereitgestellt werden, die einer solchen Knickbildung entgegenwirkt. Dabei kann durch eine geänderte Wahl des Materials des Faltenbalges, die beim Stand der Technik aufgefallene Beeinträchtigung aufgehoben oder erheblich reduziert werden. Insbesondere kann durch den erfindungsgemäß vorgesehenen Schichtaufbau verhindert werden, dass sich Knicke über Knickstellen dauerhaft in das Material einprägen.

Insbesondere kann durch die erfindungsgemäß bereitgestellte Schichtstruktur das Ablageverhalten des Faltenbalges dahingehend verbessert werden, dass eine Änderung der Dachkonstruktion oder eine Änderung des Dachelementes oder eine Änderung der Karosserie, oder eine geänderte Konstruktion einer Aufstellvorrichtung oder eines Unterbringungsraumes nicht erforderlich ist. Im Prinzip kann die an sich bekannte Dachkonstruktion gänzlich beibehalten werden. Es genügt, für den Faltenbalg ein anderes Material zu verwenden und auf die erfindungsgemäße mehrlagige Schichtstruktur zurückzugreifen.

Vorteilhaft kann die Schichtstruktur eine textile Schicht und eine Kunststoffschicht umfassen. Die Kunststoffschicht kann z. B. aus einem schmelzenden Klebstoff oder Schmelzkunststoff, also insbesondere einem Thermoplast bestehen. Der schmelzende Klebstoff oder Kunststoff kann im Zuge der Fertigung der Schichtstruktur zumindest teilweise in die textile Schicht eindringen und sich mit dieser verbinden.

Bei Ablage des Faltenbalges in einem komprimierten Zustand kann die nunmehr aus unterschiedlichen Schichten bestehende Schichtstruktur zwar einerseits eine hohe Flexibilität und bei Bedarf auch eine gewisse Dehnbarkeit bereitstellen. Sie kann allerdings auch eine Rückstellkraft aufbringen, die insbesondere in den Abschnitten der Biegebereiche einer Faltung entlang einer Faltlinie entgegenwirkt und/oder die in den Biegebereich auftretenden Kräfte auf größere Flächenabschnitte verteilt.

Insbesondere kann durch die besondere Wahl der Schichtstruktur für den Faltenbalg im mikroskopischen Maßstab dafür gesorgt werden, dass auch in den Biegebereichen der Faltung noch gewisse Mindestradien gewährleistet werden und sich die dort auftretenden Biegekräfte über größere Materialabschnitte oder größere Flächen verteilen. Hierdurch kann einer Rissbildung im frühen Stadium entgegengewirkt werden. Auch kann durch die Wahl besonderer Materialeigenschaften der Schichtstruktur verhindert werden, dass sich dauerhaft Knicklinien, Faltlinien oder Knickstellen im Material und abzeichnen.

Im Stand der Technik konnte es dazu kommen, dass infolge einer lang andauernden Ablage über einen sehr langen Zeitraum im komprimierten Zustand oder infolge einer häufigen Ablage des Faltenbalgs im komprimierten Zustand bei Aufspannung des Faltenbages eine Abzeichnung von Knicklinien und Knickstellen ergab. Auch waren diese z. B. durch Farbunterschiede oder durch Schattenbildung leicht erkennbar und unansehnlich.

Bei dem erfindungsgemäß veränderten Faltenbalg sind derartige optische Beeinträchtigungen und Unansehnlichkeiten nicht mehr feststellbar.

Die Erfindung erkennt darüber hinaus, dass konstruktionsbedingt auch nicht immer eindeutig festgelegt ist, wo exakt sich Biegebereiche bilden. Auch kann bei der Ablage des Faltenbalges aufgrund der dabei maßgeblichen Stofflosen eine unterschiedliche Positionierung einzelner Bereiche des Faltenbalges auftreten. Dabei können ebenfalls konstruktionsbedingt auch unerwartet hohe Punktlasten in bestimmten Bereichen auftreten, beispielsweise weil Werkstoffbereiche des Faltenbalges zwischen sich bewegenden Teilen der Dachkonstruktion beim Öffnen oder Schließen des Dachelementes eingeklemmt werden. Auch derartige Punktlasten auf das Material können durch die erfindungsgemäße Schichtstruktur erheblich besser aufgefangen und verarbeitet werden.

Schließlich kann durch Einsatz geeigneter Materialien für die erfindungsgemäße Schichtstruktur auch erreicht werden, dass aufgrund besonderer Dehnbarkeiten und Flexibilitäten des Materials des Faltenbalges fertigungsbedingte Toleranzen bei der Herstellung der Dachkonstruktion besser ausgeglichen werden können als bei Dachkonstruktionen des Standes der Technik.

Ein Faltenbalg gemäß der vorliegenden Erfindung umfasst wenigstens einen Wandabschnitt eines sich in Folge einer Verlagerungsbewegung des Dachelementes in seine ausgefahrene Gebrauchsposition ergebenden, vergrößerten Innenraumes des Fahrzeugs oder sich ergebenden zusätzlichen Raumes. Es genügt, wenn der Faltenbalg sich entlang eines Wandungsabschnittes des vergrößerten Innenraumes erstreckt.

Von der Erfindung sind insbesondere Faltenbälge umfasst, die den erweiterten oder zusätzlich geschaffenen Innenraum des Fahrzeuges in Umlaufrichtung vollständig oder im Wesentlichen vollständig oder überwiegend umgeben.

Vorteilhafterweise erstreckt sich ein Abschnitt des Faltenbalges in aufgespanntem Zustand entlang einer Ebene. Von der Erfindung sind aber auch Ausführungsbeispiele umfasst, bei denen sich der Faltenbalg im aufgespannten Zustand nicht entlang einer Ebene, sondern entlang einer beliebigen, vorgegebenen, z. B. auch gekrümmten Raumform erstreckt, beispielsweise auch unter Zuhilfenahme zusätzlicher Spannelemente.

Infolge einer Verlagerung des Dachelementes in seine Gebrauchsposition wird der Fahrzeuginnenraum vergrößert oder erweitert. Beispielsweise kann infolge einer Verlagerung des Dachelementes ein Schlafraum für die Insassen des Fahrzeuges geschaffen oder vergrößert werden. Von der Erfindung ist aber beispielsweise auch umfasst, wenn der Innenraum des Fahrzeuges erweitert oder vergrößert werden soll, um z. B. ein aufrechtes Stehen von Nutzern des Fahrzeuges zu ermöglichen oder um einen zusätzlichen Stauraum zu schaffen.

Als Kraftfahrzeug im Sinne der vorliegenden Patentanmeldung werden beispielsweise Wohnmobile, Camper, Reisemobile, Wohnwagen, etc. verstanden. Ein Kraftfahrzeug im Sinne der vorliegenden Patentanmeldung kann selbstfahrend ausgebildet sein, wie z. B. ein Wohnmobil, oder als ein nicht selbstfahrendes Kraftfahrzeug, wie z. B. ein Wohnwagen oder ein Anhänger, ausgebildet sein und an ein selbstfahrendes Fahrzeug angehängt oder anhängbar ausgebildet sein.

Ausführungsbeispiele einer erfindungsgemäßen Dachkonstruktion sind in den nachfolgenden Figuren mit nur einem verlagerbaren Dachelement dargestellt. Von der Erfindung sind auch nicht dargestellte Dachkonstruktionen umfasst, die mehrere verlagerbare Dachelemente aufweisen.

Die erfindungsgemäß vorgesehene Bereitstellung einer Schichtstruktur für den Faltenbalg ermöglicht eine individuelle Anpassung des Faltenbalges an individuelle Anforderungen. So kann die Schichtstruktur z. B. mit Schichten unterschiedlicher Farbe, unterschiedlicher technischer Eigenschaften, unterschiedlicher Härten, unterschiedlicher Elastizitäten, unterschiedlicher Dehnbarkeiten, unterschiedlicher Wasserdampfdurchlässigkeiten, unterschiedlicher Wasserundurchlässigkeiten, unterschiedlicher Dichtigkeitseigenschaften, etc. ausgestaltet sein.

Das Material der Schichtstruktur kann dabei auch so gewählt werden, dass über eine lange Nutzungsdauer des Faltenbalges eine hohe Unempfindlichkeit gegenüber Witterungseinflüssen, Temperaturschwankungen, Feuchtigkeitsschwankungen erreicht wird.

Gemäß der Erfindung, weist die Schichtstruktur wenigstens zwei Schichten auf. Dies ist insbesondere auch dahingehend vorteilhaft, als dass der Faltenbalg auf seiner dem Außenraum zugewandten Seite eine andere Struktur, Optik, Farbe oder Haptik aufweisen kann, als auf seiner dem Innenraum zugewandten Seite.

Gemäß einer vorteilhaften Ausgestaltung der Erfindung weist die Schichtstruktur drei Schichten auf. Dabei ist insbesondere vorgehen, dass die Schichtstruktur eine Mittelschicht, insbesondere eine Verbindungsschicht, aufweist und zwei äußere Schichten. Die erste äußere Schicht, die sogenannte Außenschicht, ist dem Außenraum des Fahrzeuges und die zweite äußere Schicht, die sogenannte Innenschicht, ist dem Innenraum des Fahrzeugs zugeordnet. Die mittlere Schicht kann insbesondere dazu ausgebildet sein, die beiden äußeren Schichten miteinander zu verbinden.

Gemäß einer vorteilhaften Ausgestaltung der Erfindung sind die unterschiedlichen Schichten aneinander befestigt. Hierdurch kann eine hohe Lebensdauer der Schichtstruktur und damit eine hohe Lebensdauer des Faltenbalges erreicht werden.

Gemäß einer weiteren vorteilhaften Ausgestaltung der Erfindung bestehen die Schichten der Schichtstruktur aus unterschiedlichen Materialien. Hierdurch besteht die Möglichkeit, die physikalischen Eigenschaften des Faltenbalges zu optimieren und individuell an die jeweils gestellten Anforderungen anzupassen.

Gemäß einer weiteren vorteilhaften Ausgestaltung der Erfindung umfasst die Schichtstruktur wenigstens eine Schicht aus einem textilen Material. Dies ermöglicht einen Rückgriff auf herkömmliche Materialien.

Gemäß einer weiteren vorteilhaften Ausgestaltung der Erfindung ist die Schicht aus einem textilen Material einem Außenraum des Faltenbalges zugewandt. Hierdurch besteht die Möglichkeit, eine Dachkonstruktion mit einem herkömmlichen Ansehverhalten bereitzustellen.

Gemäß einer weiteren vorteilhaften Ausgestaltung der Erfindung umfasst die Schichtstruktur zwei Schichten, zwischen denen eine Verbindungsschicht, also eine dritte Schicht, angeordnet ist. Die Verbindungsschicht kann insbesondere dazu dienen, die beiden Schichten miteinander dauerhaft fest zu verbinden.

Gemäß einer weiteren vorteilhaften Ausgestaltung der Erfindung umfasst die Schichtstruktur wenigstens eine Schicht aus einem Kunststoff oder mit einer Beschichtung aus Kunststoff. Dies ermöglicht beispielsweise die Bereitstellung eines flächenhaften Materials, mit dem auf einfache Weise auch eine Befestigung erreichbar ist. Der Kunststoff kann insbesondere von einem Thermoplast oder einer anderen, geeigneten, verklebbaren oder Heißschmelz- verklebbaren Kunststoff bereitgestellt sein.

Hierdurch werden, z. B. einfach durchführbare Fertigungsmethoden zur Herstellung eines solchen Faltenbalges bzw. zur Herstellung einer solchen Dachkonstruktion möglich.

Beispielsweise können zur Herstellung sogenannte Kalandrierwalzen verwendet sein, die die verschiedenen unterschiedlichen Schichten der Schichtstruktur aneinander befestigen, in dem sie die Schichtstruktur unter Druck und Hitze aufeinander zu beaufschlagen. Sie können für ein Aufschmelzen des Kunststoffes sorgen und zugleich die erforderlichen Andruck- oder Anpresskräfte bereitstellen.

Gemäß einer weiteren vorteilhaften Ausgestaltung der Erfindung ist der Kunststoff von einem thermoplastischen Kunststoff und/oder aus einem Material wie PTFE (Polytetrafluorethylen), PU (Polyurethan) oder PES (Polyester) bereitgestellt. Diese Ausführungsform ermöglicht einen Rückgriff auf bekannte Materialien.

Gemäß einer weiteren vorteilhaften Ausgestaltung der Erfindung ist der Kunststoff schmelzbar, insbesondere heißschmelzbar, ausgebildet. Dies ermöglicht eine besonders einfache Fertigung eines erfindungsgemäßen Faltenbalges.

Gemäß einer weiteren vorteilhaften Ausgestaltung der Erfindung sind die unterschiedlichen Schichten bereichsweise, insbesondere flächenweise, aneinander befestigt. Eine bereichsweise Befestigung der unterschiedlichen Schichten der Schichtstrukturen aneinander umfasst gemäß der Erfindung - im Unterschied zu einer punktartigen oder linienförmigen Befestigung - eine großflächige oder insbesondere vollflächige Befestigung der Schichten aneinander.

Insbesondere sind von der Erfindung Ausführungsbeispiele umfasst, bei denen die Innenseite einer ersten Schicht mit der Außenseite einer zweiten Schicht, wobei die Außenseite der zweiten Schicht der Innenseite der ersten Schicht zugewandt ist, vollflächig aneinander befestigt werden. Die Befestigung kann unter Zuhilfenahme eines gesonderten Klebemittels, z. B. eines Klebstoffes, erfolgen oder durch Aufschmelzen einer aus Kunststoff bestehenden oder einer Kunststoff umfassenden Schicht.

Gemäß einer alternativen Ausgestaltung der Erfindung sind die Schichten aneinander nur punktartig oder linienartig befestigt.

Es kommen anstelle oder zusätzlich zu einer Verklebung beispielsweise auch andere Befestigungsmittel wie Nähte, Nieten, Verklettungen oder andere geeignete Befestigungsarten in Betracht.

Gemäß einer vorteilhaften Ausgestaltung der Erfindung ist die Schichtstruktur flexibel ausgebildet. Dies erleichtert das Ablegen des Faltenbalges im komprimierten Zustand.

Gemäß einer weiteren vorteilhaften Ausgestaltung der Erfindung ist die Schichtstruktur rückstellelastisch ausgebildet. Insbesondere im Bereich der Knickstellen oder Faltstellen, die auftreten, wenn sich der Faltenbalg im komprimierten, abgelegten Zustand befindet, können im mikroskopischen Maßstab besondere Materialeigenschaften der verwendeten Schichten, z. B. für eine Bereitstellung von Mindestradien im Bereich der Umbiegestellen oder für eine Verteilung der auftretenden Kräfte auf große Flächen sorgen, insbesondere um Punktlasten zu vermeiden oder zu reduzieren.

Die Erfindung bezieht sich gemäß einem weiteren Aspekt auf einen Faltenbalg für eine Dachkonstruktion nach Anspruch 15.

Die Aufgabe der Erfindung besteht darin, einen Faltenbalg bereitzustellen, der zur Verwendung in einer vorbeschriebenen Dachkonstruktion aus dem Stand der Technik geeignet ist und der eine Langlebigkeit gewährleistet.

Die Erfindung löst die Aufgabe mit den Merkmalen des Anspruchs 15.

Zur Vermeidung von Wiederholungen, zur Erläuterung der Merkmale der Erfindung nach Anspruch 15 und bzgl. der vorteilhaften Ausführungsformen wird auf die obigen Ausführungen zu den vorherigen Ansprüchen verwiesen.

Gemäß einer vorteilhaften Ausgestaltung der Erfindung ist der Faltenbalg dadurch gekennzeichnet, dass die Schichtstruktur drei Schichten ausweist.

Gemäß einer weiteren vorteilhaften Ausgestaltung der Erfindung ist der Faltenbalg dadurch gekennzeichnet, dass die unterschiedlichen Schichten aneinander befestigt sind.

Gemäß einer weiteren vorteilhaften Ausgestaltung der Erfindung ist der Faltenbalg dadurch gekennzeichnet, dass die Schichtstruktur Schichten aus unterschiedlichen Materialien umfasst.

Gemäß einer weiteren vorteilhaften Ausgestaltung der Erfindung ist der Faltenbalg dadurch gekennzeichnet, dass die Schichtstruktur wenigstens eine Schicht aus einem textilen Material, insbesondere aus einem Gewebe, insbesondere aus einem Polyester-Gewebe, umfasst.

Gemäß einer weiteren vorteilhaften Ausgestaltung der Erfindung ist der Faltenbalg dadurch gekennzeichnet, dass die Schicht aus textilem Material einem Außenraum des Faltenbalges zugewandt ist.

Gemäß einer weiteren vorteilhaften Ausgestaltung der Erfindung ist der Faltenbalg dadurch gekennzeichnet, dass die Schichtstruktur zwei Schichten, insbesondere aus textilem Material, umfasst, zwischen denen eine Verbindungsschicht angeordnet ist.

Gemäß einer weiteren vorteilhaften Ausgestaltung der Erfindung ist der Faltenbalg dadurch gekennzeichnet, dass die Schichtstruktur wenigstens eine Schicht aus einem Kunststoff oder mit einer Beschichtung aus Kunststoff umfasst.

Gemäß einer weiteren vorteilhaften Ausgestaltung der Erfindung ist der Faltenbalg dadurch gekennzeichnet, dass die Verbindungsschicht von einer Schicht aus einem Kunststoff bereitgestellt ist oder eine Beschichtung aus Kunststoff umfasst.

Gemäß einer weiteren vorteilhaften Ausgestaltung der Erfindung ist der Faltenbalg dadurch gekennzeichnet, dass der Kunststoff von einem thermoplastischen Kunststoff und/oder aus einem Material wie PTFE (Polytetrafluorethylen), PU (Polyurethan), PES (Polyester) bereitgestellt ist.

Gemäß einer weiteren vorteilhaften Ausgestaltung der Erfindung ist der Faltenbalg dadurch gekennzeichnet, dass der Kunststoff schmelzbar, insbesondere heißschmelzbar, ausgebildet ist.

Gemäß einer weiteren vorteilhaften Ausgestaltung der Erfindung ist der Faltenbalg dadurch gekennzeichnet, dass die unterschiedlichen Schichten bereichsweise, insbesondere flächenweise, aneinander befestigt sind.

Gemäß einer weiteren vorteilhaften Ausgestaltung der Erfindung ist der Faltenbalg dadurch gekennzeichnet, dass die unterschiedlichen Schichten punktartig oder linienartig aneinander befestigt sind.

Gemäß einer weiteren vorteilhaften Ausgestaltung der Erfindung ist der Faltenbalg dadurch gekennzeichnet, dass die Schichtstruktur flexibel ausgebildet ist.

Gemäß einer weiteren vorteilhaften Ausgestaltung der Erfindung ist der Faltenbalg dadurch gekennzeichnet, dass die Schichtstruktur rückstellelastisch und/oder dehnbar ausgebildet ist.

Weitere Vorteile ergeben sich anhand der nicht zitierten Unteransprüche sowie anhand der in den Zeichnungen dargestellten Ausführungsbeispiele der Erfindung. In den Zeichnungen zeigen:
- Fig. 1: In einer schematischen, perspektivischen Ansicht ein erstes Ausführungsbeispiel einer an einem Fahrzeug angebrachten Dachkonstruktion, mit einem in einer ausgefahrenen Gebrauchsstellung befindlichen Dachelement, wobei sich der Faltenbalg im aufgespannten Zustand befindet,
- Fig. 2: in einer vergleichbaren Darstellung die Dachkonstruktion gemäß Fig. 1 mit in Nichtgebrauchsposition befindlicher Dachkonstruktion und mit in komprimiertem Zustand abgelegten Faltenbalg,
- Fig. 3: in einer teilgeschnittenen schematischen Ansicht einen Abschnitt eines Ausführungsbeispiels eines erfindungsgemäßen Faltenbalges der Dachkonstruktion der Fig. 1 in aufgespanntem Zustand, etwa entlang Schnittlinie III-III, in Fig. 1,
- Fig. 4: in einer schematischen Darstellung gemäß Fig. 3 einen Abschnitt des Faltenbalges der Fig. 3 in einem komprimierten, in Falten abgelegten Zustand,
- Fig. 5: in einer vergrößerten, teilgeschnittenen, schematischen Ausschnittsdarstellung den Faltenbalg etwa gemäß Teilkreis V in Fig. 3, wobei eine Schichtstruktur umfassend drei Schichten oder Lagen angedeutet ist,
- Fig. 6: einen gegenüber Fig. 5 geänderten Faltenbalg in einer schematischen teilgeschnittenen Darstellung ähnlich der Fig. 5 unter Veranschauchlichung der unterschiedlichen Schichten und Materialarten, und
- Fig. 7: in einer perspektivischen, abgebrochenen, schematischen, teilweise explosionsartigen Ansicht die Schichtstruktur des Faltenbalges gemäß Fig. 6 unter Veranschaulichung der drei unterschiedlichen Schichten.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

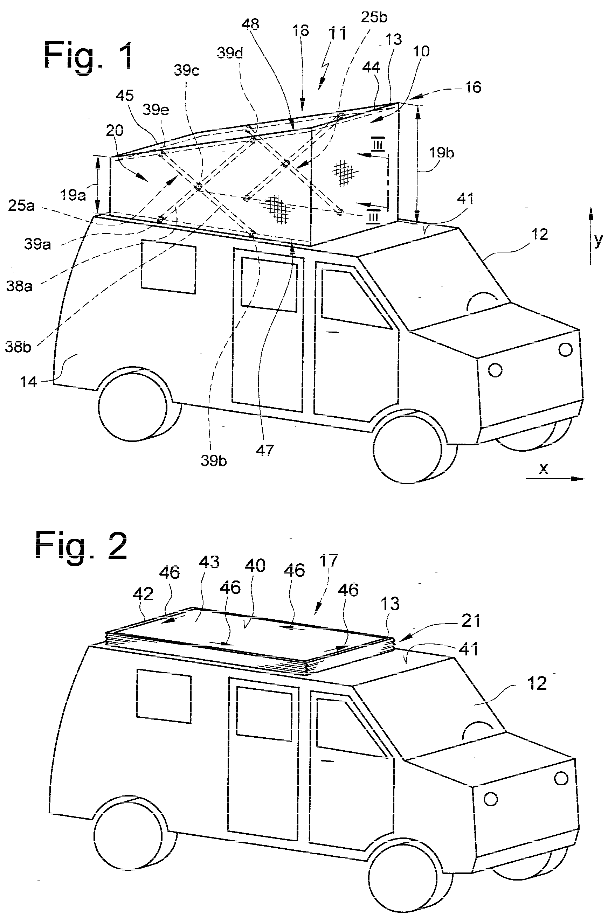

Den in seiner Gesamtheit mit dem Bezugszeichen 10 bezeichneten Faltenbalg und eine in ihrer Gesamtheit mit dem Bezugszeichen 11 bezeichnete Dachkonstruktion werden nun zunächst anhand Fig. 1 erläutert:

Fig. 1 zeigt in einer schematischen Ansicht ein Fahrzeug 12, bei dem es sich um ein Wohnmobil, einen sogenannten Camper, handelt, der z. B. für touristische Zwecke verwendet wird und eine komfortable Übernachtungsmöglichkeit bietet. Ohne auf das Innenleben des Fahrzeugs im Einzelnen einzugehen, macht ein Vergleich der Figuren 1 und 2 deutlich, dass das Fahrzeug 12 ein verlagerbares Dachelement 13 aufweist. Das verlagerbare Dachelement kann beispielsweise eine rahmenartige Struktur 42 umfassen, die ein Flächenteil 43 umgibt. Das Dachelement 13 kann manuell oder ggf. auch motorisch betrieben oder motorisch unterstützt aus einer in Fig. 2 dargestellten eingefahrenen Nichtgebrauchsposition 17 in eine in Fig. 1 dargestellte ausgefahrene und einen Innenraum des Fahrzeugs 12 vergrößernde Gebrauchsposition 16 verlagert werden.

Die Figuren 1 und 2 sind lediglich schematisch zu verstehen: Insbesondere kann das Dachelement 13 bei in Nichtgebrauchsposition 17 befindlichem Zustand gemäß Fig. 2 mit seiner Oberseite 40 - anders als in Fig. 2 dargestellt - auch mit der Oberseite 42 des Fahrzeugs 12 bündig abschließen.

Das Dachelement 13 kann, wie in den Figuren angedeutet, eine Rahmenstruktur 42 umfassen. Die Rahmenstruktur 42 kann ein entlang einer Ebene ausgebildetes Flächenteil 43 umlaufen. Dabei kann insbesondere vorgesehen sein, dass auch die Rahmenstruktur 42 entlang einer Ebene ausgebildet ist. Von der Erfindung ist auch umfasst wenn das Dachelement 13 massiv ausgebildet ist. Von der Erfindung ist weiter umfasst, wenn das Dachelement 13 nicht entlang einer Ebene ausgebildet ist, sondern sich z. B. entlang einer beliebigen Raumkurve erstreckt und z. B. einfach oder mehrfach gekrümmt ist. Das Dachelement 13 kann beispielsweise zusätzlich auch nicht dargestellte durchsichtige Fenster umfassen und/oder Verschattungseinrichtungen, insbesondere für Fenster.

Bei dem Ausführungsbeispiel der Erfindung gemäß Fig. 1 ist die Rahmenstruktur 42 von einem Flächenteil 43 ausgefüllt, beispielsweise von einer Karosseriehaut, z. B. aus Metall oder Kunststoff.

Fig. 1 deutet - lediglich schematisch - zwei Aufstellvorrichtungen 25a und 25b an. Diese dienen dazu, das Dachelement 13 in die ausgefahrene Gebrauchsposition 16 gemäß Fig. 1 zu überführen und in dieser Position zu halten. In der in Fig. 2 dargestellten Nichtgebrauchsposition 17 des Dachelementes 13 ist die in Fahrtrichtung des Fahrzeugs 12 rechte Aufstellvorrichtung 25a nicht erkennbar. Sie wird vorteilhafterweise von den Konturen der Dachkonstruktion 11 und/oder von Konturen der Karosserie 14 des Fahrzeuges 12 umhüllt oder übergriffen.

Die Aufstelleinrichtung 25a ist in Fig. 1 nur schematisch dargestellt. Bei dem Ausführungsbeispiel umfasst die Aufstellvorrichtung 25a zwei Lenker 38a, 38b. Der Lenker 38a ist über das Gelenk 39a an der Fahrzeugkarosserie 14 und über ein zweites Gelenk 39d an dem Dachelement 13 schwenkbar angelenkt. Der Lenker 38b ist über ein erstes Gelenk 39b an der Fahrzeugkarosserie 14 und über ein zweites Gelenk 39c an dem Dachelement 13 angelenkt.

Die beiden Lenker 38a, 38b sind über ein Mittelgelenk 39e miteinander gelenkig verbunden. Insbesondere stellt die Aufstelleinrichtung 25a eine Art Scherengitter bereit.

Nicht dargestellt, aber vorteilhafterweise als ein zusätzlicher Bestandteil der Aufstellvorrichtung 25a vorgesehen, ist ein Knickgelenk oder eine andere geeignete Haltevorrichtung, die gewährleistet, dass die Aufstellvorrichtung 25a das ausgefahrene Dachelement 13 in der Gebrauchsposition 16 bewahren kann. Die Aufstellvorrichtung 25 kann beispielsweise auch nicht dargestellte Federelemente oder dergleichen umfassen.

Bei dem Ausführungsbeispiel der Fig. 1 ist das Dachelement 13 mit seinem Flächenteil 43 entlang einer Ebene ausgerichtet. Nicht dargestellte weitere Ausführungsbeispiele sind von der Erfindung ebenfalls umfasst, bei der das Flächenteil 43 eine beliebige Kontur im Raum aufweist.

Bei dem Ausführungsbeispiel der Fig. 1 ist das Dachelement 13 leicht schräg geneigt zur Oberseite 41 des feststehenden, nicht verlagerbaren Abschnitts des Dachs des Fahrzeuges 12 ausgerichtet. Dementsprechend weist die vordere Kante 44 der Dachkonstruktion 11 einen größeren Abstand 19b zu der Fahrzeugkarosserie 14 auf, als die hintere Kante 45 der Dachkonstruktion 13. Der vordere Abstand ist mit 19b, der hintere Abstand mit 19a bezeichnet. Die beiden Abstände 19a und 19b können gleich oder unterschiedlich ausgebildet sein.

Von der Erfindung sind freilich auch nicht dargestellte Dachkonstruktionen umfasst, bei denen die Abstände 19a, 19b identisch ausgebildet sind.

In der Abstandsstellung 18 des Dachelementes 13 gemäß Fig. 1 wird der jeweilige Abstand 19a, 19b zwischen dem Dachelement 13 und der Karosserie 14 mit einem Faltenbalg 10 überbrückt. Der Faltenbalg 10 ist insbesondere außenseitig der Aufsteneinrichtungen 25a, 25b angeordnet.

Bezogen auf die Umfangsrichtung 46 des Dachelementes 13 ist der Faltenbalg 10 umlaufend geschlossen ausgebildet. Im aufgespannten Zustand stellt der Faltenbalg 10 bei dem Ausführungsbeispiel der Fig. 1 den gesamten Wandungsbereich des erweiterten Innenraums des Fahrzeugs 12 bereit.

Bei dem Ausführungsbeispiel der Fig. 1 ist der Faltenbalg 10 somit nach Art einer rohrförmigen oder zylindrischen Hülle ausgebildet.

Von der Erfindung sind gleichermaßen auch nicht dargestellte Dachkonstruktionen und Faltenbälge umfasst, bei denen der Faltenbalg in Umfangsrichtung 46 nur abschnittsweise ausgebildet ist und nur Werkstoffbereiche oder Teile einer Wandung des erweiterten Innenraumes umfasst.

Ein Faltenbalg 10 gemäß der Erfindung ist in einer vorteilhaften Ausgestaltung der Erfindung in Umlaufrichtung geschlossen ausgebildet. Bei weiteren Ausführungsbeispielen ist der Faltenbalg in Umlaufrichtung offen oder unterbrochen ausgebildet.

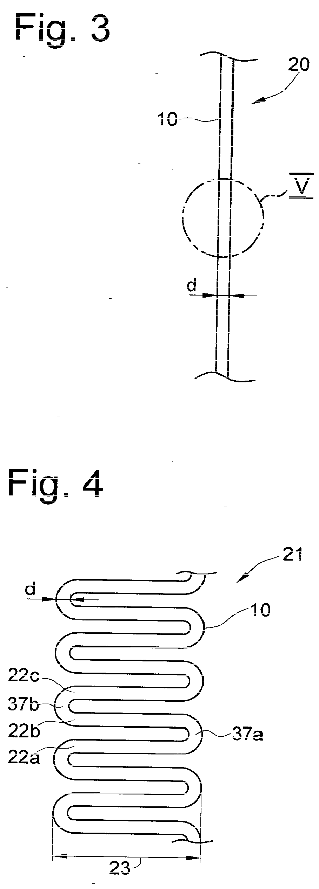

Wie sich aus dem Vergleich der Figuren 1 und 2 auf den ersten Blick ergibt, befindet sich der Faltenbalg 10 bei in Gebrauchsposition 16 befindlichem Dachelement 13 in einem aufgespannten Zustand 20. Der Faltenbalg 10 ist hierzu mit einem ersten Befestigungsbereich 47 mittelbar oder unmittelbar an der Karosserie 14 des Fahrzeuges 12 festgelegt und mit einem zweiten Befestigungsbereich 48 mittelbar oder unmittelbar an dem Dachelement 13 befestigt. Die Dimensionen des Faltenbalges 10 sind dabei z. B. derartig bemessen, dass, bezogen auf eine maximale Ausfahrbewegung des Dachelementes 13, die Länge des Faltenbalges in Ausfahrrichtung Y so bemessen wird, dass der Faltenbalg 10 gespannt ist, wenn sich das Dachelement 13 in seiner Gebrauchsposition befindet. Eine entsprechende Darstellung zeigt Fig. 3.

Wird das Dachelement 13 aus der Gebrauchsposition 16 gemäß Fig. 1 in seine Nichtgebrauchsposition 17 gemäß Fig. 2 überführt, und wird entsprechend das Dachelement 13 an die Karosserie 14 angenähert, verkürzen sich die Abstände zwischen dem ersten Befestigungsbereich 47 und dem zweiten Befestigungsbereich 48 des Faltenbaiges. Der Faltenbalg 10 legt sich daher in einem komprimierten Zustand ab.

Einen solchen komprimierten Zustand des Faltenbalges 10 zeigen die Darstellungen der Figuren 2 und 4. Fig. 4 ist lediglich schematisch zu verstehen. Fig. 4 deutet verschiedene Faltenlagen 22a, 22b an und eine gewisse Faltenlänge 23. Dies ist allerdings nur zu Prinzipzwecken dargestellt.

Wie sich der Faltenbalg 10 konkret ablegt, hängt von der Geometrie ab. Vorteilhafterweise bietet die Fahrzeugkarosserie 14 innenseitig ein Aufnahmefach zur Aufnahme des komprimierten und in Falten 22a, 22b gelegten Faltenbalges 10.

An dieser Stelle sei auch darauf hingewiesen, dass entgegen der schematischen Prinzipdarstellung der Fig. 2, der Faltenbalg 10 in komprimiertem Zustand in der Regel von einem Teil der Karosserie 14 des Fahrzeugs 12 oder von einem Blendenelement abgedeckt oder überdeckt wird, und - anders als Fig. 2 - eine Abdeckung für den im komprimierten Zustand befindlichen Faltenbalg 10, auch dazu vorgesehen ist, um den Faltenbalg vor Witterungseinflüssen zu schützen. Hierfür kann an der Karosserie 14 - was in den Figuren nicht dargestellt ist - ein Aufnahmefach für den komprimierten Faltenbalg vorgesehen sein.

Fig. 4 zeigt schematisch eine regelmäßig ausgebildete Faltenablage mit einer konstanten Faltenlänge 23. Auch dies ist lediglich schematisch zu verstehen. Die Ablage des Faltenbalges 10 in Falten 22a, 22b kann mit konstanter Faltenlänge 23 oder mit unterschiedlicher Faltenlänge 23 erfolgen. Insbesondere kann die Faltenlänge 23, der einzelnen Falten 22, 22b beim tatsächlichen Ablegen eines Faltenbalges 10 natürlich auch variieren.

Im Bereich einer Angrenzung zweier unterschiedlicher Faltenlagen 22a, 22b aneinander befindet sich jeweils ein Biegebereich 37a, 37b.

Insbesondere entlang dieser Biegebereiche können sich bei Faltenbälgen des Standes der Technik Knicke oder Risse bilden. Um dies zu verhindern, ist erfindungsgemäß eine besondere Schichtstruktur 24 vorgesehen.

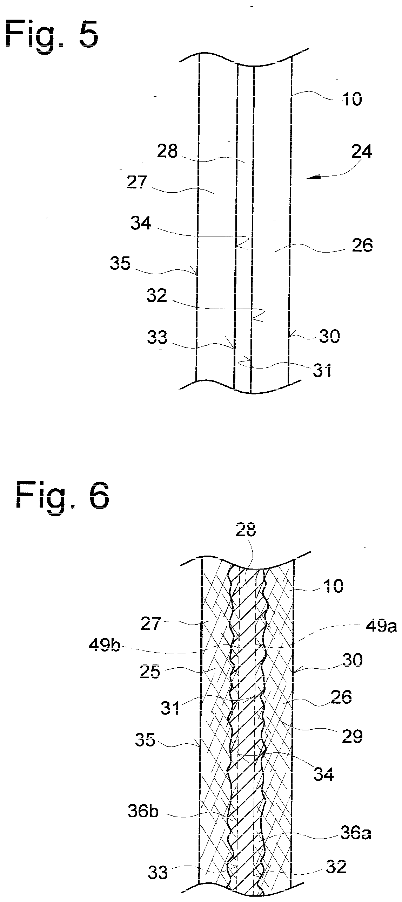

Der Faltenbalg 10 besteht ausweislich der Figuren 5 bis 7 bei diesem Ausführungsbeispiel aus einer Schichtstruktur 24 mit drei Schichten, umfassend eine Außenschicht 26, die dem Außenraum des Fahrzeuges 12 oder dem Außenraum des Faltenbalges 10zugewandt ist, eine Innenschicht 27 die dem Innenraum des Fahrzeugs 12 oder dem Innenraum des Faltenbalges 10 zugewandt ist und eine dazwischenliegende Verbindungsschicht 28.

Bei den Ausführungsbeispielen in den Figuren 5 bis 7 ist die Außenschicht 26 von einem Gewebe 29 gebildet, beispielsweise von einem Gewebe aus Polyester. Eine entsprechende Gewebestruktur, die eine Vielzahl von in unterschiedliche Richtungen verlaufende Fasern oder Fäden aufweist, deutet Fig. 6 an. Das Gewebe 29 kann eine regelmäßige oder unregelmäßige Struktur an Fasern aufweisen.

Die Außenschicht 26 und die Innenschicht 27 sind bei einem Ausführungsbeispiel der Erfindung vorteilhafterweise einem textilen Material bereitgestellt. In Frage kommen neben Geweben auch Gewirke oder Gelege. Das Material für die Faser des Gewebes kann beliebig gewählt werden.

Die Verbindungsschicht 28, die sich zwischen den beiden äußeren Schichten 26, 27 befindet, besteht aus einem oder umfasst einen unter Hitzeeinwirkung aufschmelzbaren Kunststoff.

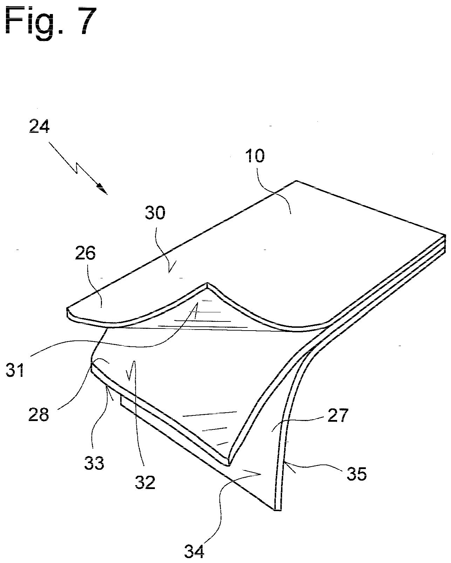

Fig. 7 zeigt die entsprechende - Schichtstruktur 24 in einer schematischen Darstellung, bei der die einem Betrachter der Fig. 7 entgegentretenden vorderen Bereiche der Schichten zu Illustrationszwecken voneinander beabstandet angeordnet sind.

Die drei Schichten 26, 27, 28 können wie folgt aneinander befestigt werden: Die Verbindungsschicht 28 oder mittlere Schicht kann aus einem Schmelzklebstoff oder einem Thermoplast oder - aus einem unter Hitzeeinwirkung aufweichenden Kunststoff bestehen. Infolge der Wärmeeinwirkung kann das Material des Kunststoffes kurzzeitig aufschmelzen und in die Struktur der Außenschicht 26 und der Innenschicht 27 eindringen.

Fig. 6 zeigt aufgeschmolzene Werkstoffbereiche 36a, 36b der Verbindungsschicht 28, die über die in Fig. 6 gestrichelt dargestellten, ursprünglich vor dem Aufschmelzen vorhandenen Schichtgrenzen 49a, 49b hinaus in die Außenschicht 26 und in die Innenschicht 27 eingedrungen oder eingetreten sind.

Nach dem Aufschmelzen der Schichten 28 wird die Zuführung weiterer Wärme oder Hitze unterbrochen. Das aufgeschmolzene Material erkaltet und erhärtet dabei. Die drei Schichten 26, 27, 28 sind dann dauerhaftfest miteinander verbunden.

Die Schichtdicken der drei Schichten 26, 27, 28 können je nach Anwendungszweck und Anforderung unterschiedlich gewählt werden.

Für herkömmliche Anforderungen hat sich eine Gesamtwandstärke des Schichtaufbaus 24, also in Summe der drei Schichten 26, 27, 28, von 0,2 bis 3 mm, insbesondere von etwa 1,2 mm, als besonders vorteilhaft herausgestellt. Dabei sind weiter vorteilhaft - anders als in Fig. 6 und Fig. 7 dargestellt - die Wandstärken der äußeren Schichten 26, 27 größer als die Wandstärke der mittleren Verbindungsschicht 28 nach dem Aufschmelzen.

Die Außenschicht 26 weist eine Außenseite 30 und eine Innenseite 31 auf. Die Mittelschicht weist eine Außenseite 32 und eine Innenseite 33 auf. Die Innenschicht 27 weist eine Außenseite 34 und eine Innenseite 35 auf.

Die aufgeschmolzenen Werkstoffbereiche 36a, 36b der Mittelschicht 28 oder Verbindungsschicht treten über die zuvor festgelegten Außenseiten 32 und Innenseiten 33, bzw. Schichtgrenzen 49,a 49b der Innenschicht hinaus aus und dringen in die Strukturen der Außenschicht 26 und der Innenschicht 27 hinein. Ein solches Eindringen der aufgeschmolzenen Werkstoffbereiche 36a, 36b wird durch Anpresswalzen oder Kalandrierwalzen, oder jedenfalls durch Aufbringung eines Anpressdruckes begünstigt.

Hierdurch wird eine vollflächige flächenhafte Befestigung der verschiedenen Schichten 26, 27, 28 aneinander bereitgestellt.

Angemerkt sei, dass bei weiteren Ausführungsbeispielen der Erfindung ein solches Eindringen von aufgeschmolzenen Werkstoffbereichen und/oder anderen Bereichen des Klebstoffes oder Kunststoffes in die Strukturen der beiden äußeren Schichten 26, 27 nicht erfolgt oder nicht erforderlich ist. Dort kann z. B. auch nur vorgesehen sein, dass eine flächige Verklebung erfolgt, ohne das ein Eindringen der Werkstoffbereiche oder Klebstoffbereiche in die äußeren Schichten 26, 27 erreicht wird.

Die Schichtstruktur 24 des erfindungsgemäßen Faltenbalges 10 ermöglicht eine Erzielung von flexiblen und dehnbaren Eigenschaften und zugleich in den Biegebereichen 37 eine Generierung elastischer Rückstellkräfte: Das Ablageverhalten des Faltenbalges 10 wird hierdurch verbessert.

Auch bei häufiger Beanspruchung und bei Aufbringung von extremen Druckkräften, beispielsweise in dem Fall, dass sich der Faltenbalg nicht wie vorherbestimmt und vorhergesehen ablegt, können sichtbare Knick-und Faltstellen oder deren Abzeichnungen und somit eine Rissbildung verhindert werden.

Gleichermaßen können Punktbelastungen oder Linienbelastungen durch Verteilung der Kräfte auf große Flächenabschnitte .entschärft werden.

Die Schichtstruktur 24 des erfindungsgemäßen Faltenbalges ist insoweit insbesondere auch zur Kraftweiterleitung und Kraftverteilung im Stande.

Die vorliegende Erfindung lässt sich an unterschiedlichen Dachkonstruktionen ansetzen, die sich z. B. als Hubdach, Hochdach oder als Aufstelldach bezeichnen lassen.

Die erfindungsgemäße Schichtstruktur 24 des Faltenbalges 10 ermöglicht besonders vorteilhafte Ausgestaltungen des Faltenbalges 10 bzgl. Dichtigkeit, Haptik, Dehnbarkeit, Knickbeständigkeit und auch Montagefreundlichkeit.

Beispielsweise können die Befestigungsbereiche 47, 48 des Faltenbalges 10 aufgrund der besonderen Beschaffenheit der Schichtstruktur 24 auf besonders einfache Weise an der Karosserie 14 oder an dem Dachelement 13 festgelegt werden.

## Patentansprüche

1. Dachkonstruktion (11) für ein Kraftfahrzeug (12), umfassend ein verlagerbares Dachelement (13), das zwischen einer eingefahrenen Nichtgebrauchsposition (17) und einer ausgefahrenen Gebrauchsposition (16) verlagerbar ist, wobei sich das Dachelement (13) in seiner ausgefahrenen Gebrauchsposition (16) in einer Abstandsstellung (18) zu einer Karosserie (14) des Fahrzeuges befindet, wobei an dem Dachelement (13) ein Faltenbalg (10) angeordnet ist, der bei in Gebrauchsposition befindlichem Dachelement einen aufgespannten Zustand (20) einnimmt und einen Abstand (19a 19b) zwischen dem Dachelement (13) und der Karosserie (14) überbrückt, und der bei in Nichtgebrauchsposition befindlichem Dachelement einen komprimierten, in Falten (22a, 22b) abgelegten Zustand (21) einnimmt, **dadurch gekennzeichnet, dass** der Faltenbalg (10) eine Schichtstruktur (24) umfasst, die wenigstens zwei unterschiedliche Schichten (26, 27, 28) aufweist.

2. Dachkonstruktion nach Anspruch 1, **dadurch gekennzeichnet, dass** die Schichtstruktur (24) drei Schichten (26, 27, 28) aufweist.

3. Dachkonstruktion nach Anspruch 1 oder 2, **dadurch gekennzeichnet, dass** die unterschiedlichen Schichten (26, 27, 28) aneinander befestigt sind.

4. Dachkonstruktion nach einem der Ansprüche 1 bis 3, **dadurch gekennzeichnet, dass** die Schichtstruktur (24) Schichten (26, 27, 28) aus unterschiedlichen Materialien umfasst.

5. Dachkonstruktion nach einem der Ansprüche 1 bis 4, **dadurch gekennzeichnet, dass** die Schichtstruktur (24) wenigstens eine Schicht (26, 27) aus einem textilen Material, insbesondere aus einem Gewebe, weiter insbesondere aus einem Polyester-Gewebe, umfasst.

6. Dachkonstruktion nach Anspruch 5, **dadurch gekennzeichnet, dass** die Schicht (26) aus textilem Material einem Außenraum des Faltenbalges (10) zugewandt ist.

7. Dachkonstruktion nach einem der vorangegangenen Ansprüche, **dadurch gekennzeichnet, dass** die Schichtstruktur (24) zwei Schichten (26, 27), insbesondere aus textilem Material, umfasst, zwischen denen eine Verbindungsschicht (28) angeordnet ist.

8. Dachkonstruktion nach einem der vorangegangenen Ansprüche, **dadurch gekennzeichnet, dass** die Schichtstruktur (24) wenigstens eine Schicht (28) aus einem Kunststoff oder mit einer Beschichtung aus Kunststoff umfasst.

9. Dachkonstruktion nach Anspruch 7, **dadurch gekennzeichnet, dass** die Verbindungsschicht (28) von einer Schicht aus einem Kunststoff bereitgestellt ist oder eine Beschichtung aus Kunststoff umfasst.

10. Dachkonstruktion nach Anspruch 8 oder 9, **dadurch gekennzeichnet, dass** der Kunststoff von einem thermoplastischen Kunststoff und/oder aus einem Material wie PTFE (Polytetrafluorethylen), PU (Polyurethan), PES (Polyester) bereitgestellt ist

11. Dachkonstruktion nach einem der vorangegangenen Ansprüche 8 bis 10, **dadurch gekennzeichnet, dass** der Kunststoff schmelzbar, insbesondere heißschmelzbar, ausgebildet ist.

12. Dachkonstruktion nach einem der vorangegangenen Ansprüche, **dadurch gekennzeichnet, dass** die unterschiedlichen Schichten (26, 27, 28) bereichsweise, insbesondere flächenweise, aneinander befestigt sind.

13. Dachkonstruktion nach einem der Ansprüche 1 bis 11, **dadurch gekennzeichnet, dass** die unterschiedlichen Schichten (26, 27, 28) punktartig oder linienartig aneinander befestigt sind.

14. Dachkonstruktion nach einem der vorangegangenen Ansprüche, **dadurch gekennzeichnet, dass** die Schichtstruktur (24) flexibel ausgebildet ist.

15. Faltenbalg (10) für eine Dachkonstruktion (11) für ein Kraftfahrzeug (12), insbesondere für eine Dachkonstruktion nach einem der vorgenannten Ansprüche, wobei der Faltenbalg (10) aus einem aufgespannten Zustand (20) in einen komprimierten, in Falten abgelegten Zustand (21) überführbar ist, umfassend eine Schichtstruktur (24), die wenigstens zwei unterschiedliche Schichten (26, 27, 28) aufweist.
